# EUROPÄISCHE PATENTANMELDUNG

(11) **EP 4 789 964 A1**
(43) Veröffentlichungstag der Anmeldung: **12.08.2026**
(21) Anmeldenummer: 26152904.4
(22) Anmeldetag: 20.01.2026
(51) Int. Cl.: B64C 13/50

(54) **AKTUATORSYSTEM, LUFTFAHRZEUG UND VERFAHREN**

(30) Priorität: 06.02.2025 DE 102025104430
(71) Anmelder: Liebherr-Aerospace Lindenberg GmbH, 88161 Lindenberg (DE)
(72) Erfinder: IMMLER, Thomas, 88138 Sigmarszell (DE); SCHILLING, Christian, 88167 Maierhöfen (DE); KINZELMANN, Julian, 88138 Hergensweiler (DE); KRONBURGER, Frank, 88161 Lindenberg (DE)
(74) Vertreter: Lorenz Seidler Gossel Part. mbB

(57) **Zusammenfassung**

Die vorliegende Erfindung betrifft ein Aktuatorsystem, insbesondere für ein Luftfahrzeug, mit einem Aktuator, der eine Umwandlungseinheit zur Umwandlung von elektrischer und/oder hydraulischer Leistung in mechanische Leistung aufweist, und einer Steuereinheit zur Versorgung der Umwandlungseinheit mit elektrischer Leistung und/oder zur Ansteuerung der Umwandlungseinheit, wobei das Aktuatorsystem eine von der Leistungseinheit separat angeordnete Elektronikeinheit aufweist, die ausgebildet ist, um einen Zustand oder mehrere Zustände des Aktuators und/oder der Umwandlungseinheit zu erfassen, den erfassten Zustand oder die erfassten Zustände in Daten umzuwandeln und die Daten digital an die Steuereinheit zu übermitteln, wobei die Elektronikeinheit einen Speicher aufweist, wobei in dem Speicher eine Eigenschaft oder mehrere Eigenschaften des Aktuators und/oder der Umwandlungseinheit in Form von Daten gespeichert sind und die Elektronikeinheit ausgebildet ist, um, insbesondere auf Anforderung der Steuereinheit, eine, mehrere oder alle der gespeicherten Daten an die Steuereinheit zu übermitteln, wobei die Steuereinheit, insbesondere basierend auf von dem Aktuator und/oder der Elektronikeinheit übermittelten Daten und/oder basierend auf an die Steuereinheit übermittelten Steuerbefehlen, ausgebildet ist, um den Aktuator und/oder die Umwandlungseinheit zu regeln und/oder zu steuern.

## Beschreibung

Die vorliegende Erfindung betrifft ein Aktuatorsystem, insbesondere für ein Luftfahrzeug, mit einem Aktuator, der eine Umwandlungseinheit zur Umwandlung von elektrischer und/oder hydraulischer Leistung in mechanische Leistung aufweist, und einer Steuereinheit zur Versorgung der Umwandlungseinheit mit elektrischer Leistung und/oder zur Ansteuerung der Umwandlungseinheit.

Aus dem Stand der Technik ist bekannt, dass Funktionen für das Auslesen von Sensoren eines Aktuators und die Ansteuerung des Aktuators in einer Recheneinheit, die oftmals als "Actuator Control Electronic" (ACE) bezeichnet wird, für den Aktuator umgesetzt sind.

Diese Recheneinheit kann gemäß dem Stand der Technik in einem "cabinet" integriert sein oder in der Nähe des Aktuators, auf dem Aktuator oder integriert in dem Aktuator angeordnet sein.

Es ist, bspw. aus der EP 3 273 592 A1 oder der EP 3 273 593 A1, auch bekannt, dass verschiedene Funktionen für den Betrieb des Aktuators aus Platz- oder Umweltbedingungen in separat voneinander angeordneten Einheiten umgesetzt sind, wobei bspw. eine Leistungselektronik in einer Einheit und eine Signalelektronik in einer davon separat angeordneten Einheit vorhanden ist.

Die EP 4 415 248 A1 offenbart ein Aktuatorsteuerungssystem mit jeweils einer Mehrzahl von baugleichen Sensoren, die über eine Signalelektronik ausgelesen werden. In der EP 4 415 248 A1sind mindestens zwei baugleiche Motorpositionssensoren und mindestens zwei baugleiche Aktuatorausgangspositionssensoren vorgesehen.

Nachteilig an den bekannten Lösungen ist unter anderem der hohe Verkabelungsaufwand, die hohe Störanfälligkeit von analogen Signalen und die Notwendigkeit von spezifischen Schnittstellen für die Anbindung von Sensoren.

Vor diesem Hintergrund liegt der vorliegenden Erfindung die Aufgabe zugrunde, ein oben genannte Aktuatorsystem, insbesondere im Hinblick auf die Systemarchitektur, zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass das Aktuatorsystem eine von der Leistungseinheit separat angeordnete Elektronikeinheit aufweist, die ausgebildet ist, um einen Zustand oder mehrere Zustände des Aktuators und/oder der Umwandlungseinheit zu erfassen, den erfassten Zustand oder die erfassten Zustände in Daten umzuwandeln und die Daten digital an die Steuereinheit zu übermitteln, wobei die Elektronikeinheit einen Speicher aufweist, wobei in dem Speicher eine Eigenschaft oder mehrere Eigenschaften des Aktuators und/oder der Umwandlungseinheit in Form von Daten gespeichert sind und die Elektronikeinheit ausgebildet ist, um, insbesondere auf Anforderung der Steuereinheit, eine, mehrere oder alle der gespeicherten Daten an die Steuereinheit zu übermitteln, wobei die Steuereinheit, insbesondere basierend auf von dem Aktuator und/oder der Elektronikeinheit übermittelten Daten und/oder basierend auf an die Steuereinheit übermittelten Steuerbefehlen, ausgebildet ist, um den Aktuator und/oder die Umwandlungseinheit zu regeln und/oder zu steuern.

Die Elektronikeinheit ist vorzugsweise in einfacher "simple" Elektronik realisiert und/oder weist keinen Mikrocontroller und/oder FPGA auf.

Die Elektronikeinheit weist vorzugsweise einen Speicher für Aktuator-Daten auf. In dem Speicher können z.B. Life- und Kalibrierdaten für den Aktuator gespeichert bzw. abgelegt werden. Vorzugsweise ist ein Speicher auf dem Aktuator vorhanden.

Die Elektronikeinheit kann ausgebildet sein, um aktuatorspezifische Eigenschaften und Konfigurationen in Form von Daten zu speichern und kann ausgebildet sein, um diese Daten digital an die Steuereinheit zu übermitteln.

Die Elektronikeinheit fixiert vorzugsweise einen stabilen Teil der Aktuatoren und erlaubt somit einen Baukasten. Die Elektronikeinheit ist vorzugsweise gemäß einem Standard ausgebildet.

Vorzugsweise erfolgt eine Splittung der zur Steuerung des Aktuators notwendigen Funktionen durch Umsetzung dieser Funktionen auf separaten Einheiten, insbesondere zur besseren Integration des Aktuatorsystems in ein Luftfahrzeug bzw. für eine bessere Platzaufteilung. Vorzugsweise ist die Elektronikeinheit mit der Steuereinheit über ein standardisiertes Interface verbunden.

Vorzugsweise werden über die Elektronikeinheit mindestens eine Information oder mehrere Informationen über den Zustand des Aktuators gesammelt und digital an die Steuereinheit übermittelt.

Die Steuereinheit kann als "Actuator Control Electronic" (ACE) bezeichnet werden.

Die Elektronikeinheit kann als kleine "Remote Electronic Unit" (REU) oder als Nano-REU (nREU) bezeichnet werden.

Die Elektronikeinheit ist vorzugsweise eine kleine integrierbare Elektronik zur Digitalisierung der Schnittstellen des Aktuators.

Es können mehrere Elektronikeinheiten verteilt an oder in dem Aktuator, insbesondere zur besseren Raumausnutzung, angeordnet sein.

Vorzugsweise ist eine Wiederverwendung und Modularisierung möglich.

Vorzugsweise ist vorgesehen, dass die Steuereinheit und die Elektronikeinheit jeweils eine digitale Kommunikationsschnittstelle aufweisen und über diese Kommunikationsschnittstellen verbunden sind, um Daten von der Elektronikeinheit an die Steuereinheit und/oder um Daten von der Steuereinheit an die Elektronikeinheit zu übermitteln.

Die Elektronikeinheit weist vorzugsweise eine digitale Schnittstelle auf.

Die digitale Schnittstelle ist vorzugsweise ausgebildet, um Informationen bzw. Daten digital an die Steuereinheit zu übermitteln.

Die Elektronikeinheit und die Steuereinheit sind vorzugsweise über die digitale Schnittstelle verbunden.

Die Elektronikeinheit kann über die digitale Schnittstelle Daten, z.B. an die Steuereinheit, übermitteln bzw. senden und/oder, z.B. von der Steuereinheit, Daten übermittelt bekommen bzw. empfangen.

Die digitale Schnittstelle kann ausgebildet sei, um Daten über Licht, kabellos, über Funk und/oder seriell zu übermitteln.

Die Übermittlung kann über Licht, kabellos, über eine Funkverbindung oder seriell erfolgen.

Aufgrund des begrenzten Platzes lassen sich in einer denkbaren Ausführungsform nur ein Teil der zur Steuerung des Aktuators notwendigen Funktionen in Einheiten, die zur Ausführung dieser Funktionen ausgebildet sind, auf dem Aktuator integrieren und/oder anordnen. In einer denkbaren Ausführungsform werden die Einheiten, die jeweils zur Ausführung von zur Steuerung des Aktuators notwendigen Funktionen ausgebildet sind, in dem Aktuatorsystem verteilt angeordnet.

Die Steuereinheit kann an unterschiedlichen Orten angeordnet sein.

Die Steuereinheit kann an einem anderen Ort als die Elektronikeinheit auf oder an dem Aktuator, z.B. an einer Stirnseite des Aktuators angeordnet sein.

Die Steuereinheit kann nahe am Aktuator an einem "Rear Spar" des Luftfahrzeugs angeordnet sein.

Die Steuereinheit kann in der Avionic Bay des Luftfahrzeugs angeordnet sein.

Die Steuereinheit kann im Flügel oder Rumpf des Luftfahrzeugs angeordnet sein.

Die Steuereinheit und die Elektronikeinheit sind vorzugsweise über eine Bus-Verbindung miteinander verbunden.

Durch die Verwendung von Bus-Verbindungen wird der Verkabelungsaufwand in vorteilhafter Weise reduziert
Vorzugsweise ist vorgesehen, dass die Elektronikeinheit ausgebildet ist, um einfache Ansteuerungen in Form einer digitalen Ein-Aus-Ansteuerung, insbesondere ein Auftrennen eines Leistungspfads und/oder ein Schalten einer Verriegelungseinheit, insbesondere einer Bremse, ausführen zu können.

Die Elektronikeinheit ist vorzugsweise ausgebildet, um einfache Ein-Aus-Steueraufgaben übernehmen zu können, wie z.B. ein Auftrennen eines Leistungspfads oder Schalten einer Verriegelungseinheit, insbesondere einer Bremse.

Vorzugsweise kann die Elektronikeinheit einfache Steueraufgaben, z.B. Bremsenansteuerung, ausführen.

Die Elektronikeinheit weist vorzugsweise eine Spannungsversorgung für analoge Spannungen auf, die insbesondere ausgebildet ist, um z.B. einen Servoverstärker anzusteuern und/oder um Sensoren mit Spannung zu versorgen.

Vorzugsweise ist vorgesehen, dass der Zustand oder die Zustände eine Position der Umwandlungseinheit, eine Position des Aktuators, insbesondere eines mechanischen Aktuatorausgangs, eine Temperatur des Aktuators, eine auf den Aktuator wirkende Kraft, ein auf den Aktuator wirkendes Moment, eine an dem Aktuator anliegende elektrische Spannung, ein durch den Aktuator fließenden elektrischen Strom und/oder eine oder mehrere sonstige Größen, insbesondere eine Beschleunigung und/oder eine Feuchtigkeit, ist oder sind.

Ein Zustand oder mehrere Zustände des Aktuators und/oder der Umwandlungseinheit können vorzugsweise von der Elektronikeinheit über Sensoren erfasst werden. Dieser Zustand oder diese Zustände können z.B. eine Motorposition, eine Aktuatorposition, eine Aktuatortemperatur, eine Aktuatorkraft, einen Aktuatorstrom, eine Aktuatorspannung und/oder zusätzliche Umweltinformation, wie Beschleunigung, Feuchtigkeit etc. sein oder umfassen.

Der Aktuator weist vorzugsweise stabile Schnittstellen für die Erfassung der Motorposition, der Aktuatorposition, der Temperatur und/oder der Kraft auf.

Vorzugsweise ist der Verkabelungsaufwand zwischen Steuereinheit und Aktuator vermindert.

Vorzugsweise erfolgt eine Aufsplittung der Funktionen eines Aktuatorsystems auf verschiedene Einheiten.

Vorzugsweise ist vorgesehen, dass der Aktuator eine oder mehrere zusätzliche mechanische und/oder hydraulische Umwandlungseinheiten aufweist.

Vorzugsweise ist vorgesehen, dass die Steuereinheit einen Leistungssteller aufweist, der ausgebildet ist, um die Umwandlungseinheit mit elektrischer Energie zu versorgen.

Die Begriffe "Energie" und "Leistung" sind im Rahmen der Erfindung vorzugsweise austauschbar.

Die Versorgung der Elektronikeinheit mit elektrischer Energie kann durch die Steuereinheit erfolgen aber auch extern des Aktuatorsystems bereitgestellt werden.

Die Elektronikeinheit kann auch über die Motorphasen eines Elektromotors des Aktuators versorgt werden.

Die Steuereinheit weist vorzugsweise eine Steuerung und einen Leistungssteller auf.

Der Aktuator und/oder die Elektronikeinheit weisen besonders bevorzugt keinen Leistungssteller auf.

Vorzugsweise ist vorgesehen, dass das Aktuatorsystem einen oder mehrere Sensoren aufweist, die derart mit der Elektronikeinheit verbunden und angeordnet sind, dass die Elektronikeinheit den Zustand oder die Zustände des Aktuators und/oder der Umwandlungseinheit mittels des Sensors oder mittels der Sensoren erfassen kann, wobei der Sensor ausgebildet und angeordnet ist, um den Zustand oder mehrere Zustände erfassen zu können oder wobei jeder der Sensoren ausgebildet und angeordnet ist, um jeweils einen oder mehrere der Zustände erfassen zu können.

Vorzugsweise erfolgt eine Digitalisierung der Sensordaten auf dem Aktuator an der Messstelle. Vorzugsweise sind die Sensoren als smarte Sensoren ausgebildet.

Der Sensor oder die Sensoren sind vorzugsweise über eine Standard-Schnittstelle an die Elektronikeinheit angebunden.

Vorzugsweise ist vorgesehen, dass für die Erfassung mindestens eines Zustands des Aktuators, insbesondere für die Erfassung der Position der Umwandlungseinheit und/oder der Position des Aktuators, insbesondere des mechanischen Aktuatorausgangs, insbesondere jeweils, nur genau ein Sensor vorgesehen ist.

Besonders bevorzugt ist vorgesehen, dass das Aktuatorsystem, insbesondere je Umwandlungseinheit, höchstens nur genau einen Umwandlungseinheitspositionssensor, insbesondere Motorpositionssensor und/oder höchstens nur genau einen Aktuatorpositionssensor aufweist. Vorzugsweise ist nur ein Motorpositionssensor vorhanden und/oder es erfolgt eine geberlose Regelung.

Vorzugsweise erfolgt ein Einlesen von über einen Sensor erfassten Zuständen bzw. Zustandsgrößen eines Aktuators. Insbesondere ist für das Erfassen jeweils eines Zustands genau ein Sensor vorgesehen. Bspw. ist für das Erfassen einer bestimmten Position des Aktuators vorzugsweise genau ein Sensor vorgesehen.

Vorzugsweise ist vorgesehen, dass die Elektronikeinheit Bestandteil des Aktuators ist und/oder in einer baulichen Einheit mit dem Aktuator und/oder der Umwandlungseinheit angeordnet ist.

Vorzugsweise ist vorgesehen, dass alle Bestandteile des Aktuatorsystems in einer baulichen Einheit angeordnet sind oder mindestens ein Bestandteil des Aktuatorsystems, insbesondere die Steuereinheit, separat von den anderen Bestandteilen des Aktuatorsystems angeordnet ist.

Vorzugsweise ist vorgesehen, dass die Umwandlungseinheit ein Elektromotor, insbesondere ein permanenterregter Sychnchronmotor, oder eine Hydraulikeinheit mit einem Hydraulikventil, insbesondere ein Servoventil, und einem Hydraulikzylinder ist.

Vorzugsweise ist vorgesehen, dass der Aktuator ein Getriebe und/oder eine Spindel aufweist, wobei die Umwandlungseinheit ausgebildet und angeordnet ist, um das Getriebe anzutreiben und/oder das Getriebe ausgebildet und angeordnet ist, um die Spindel anzutreiben oder dass der Aktuator eine Hydraulikpumpe und/oder einen Hydraulikzylinder aufweist, wobei die Umwandlungseinheit ausgebildet und angeordnet ist, um die Hydraulikpumpe anzutreiben und/oder die Hydraulikpumpe ausgebildet und angeordnet ist, um den Hydraulikzylinder anzutreiben und/oder mit hydraulischer Leistung zu versorgen.

Der Aktuator kann ein elektromechanischer Aktuator (EMA), ein elektrohydraulischer Aktuator (EHA), ein servohydraulischer Aktuator (SHA) oder eine Elektromotorpumpe (EMP) sein.

Der Aktuator kann eine, insbesondere elektromagnetische, Umwandlungseinheit, die elektrische Leistung in mechanische Leistung umwandeln kann, aufweisen und kann eine oder mehrere zusätzliche mechanische und/oder hydraulische Umwandlungseinheiten aufweisen.

Die mechanische Umwandlungseinheit kann eine elektromagnetisch betätigbare Arretierungseinheit, insbesondere eine Bremse, sein.

Die hydraulische Umwandlungseinheit kann ein elektromagnetisch betätigbares Ventil sein.

Der Aktuator ist vorzugsweise derart ausgebildet, dass über einen Elektromotor mit damit verbundener Mechanik elektrische Leistung in mechanische Leistung umgewandelt werden kann.

Der Aktuator kann ein rotatorischer elektromechanischer Aktuator (REMA) sein, wobei die Umwandlungseinheit ein permanenterregter Sychnchronmotor (PMSM) ist, der angeordnet und ausgebildet ist, ein Getriebe des Aktuators anzutreiben.

Der Aktuator kann ein linearer elektromechanischer Aktuator (LEMA) sein, wobei die Umwandlungseinheit ein permanenterregter Sychnchronmotor (PMSM) ist, der angeordnet und ausgebildet ist, eine Spindel des Aktuators anzutreiben.

Der Aktuator kann ein elektrohydraulischer Aktuator (EHA) sein, wobei die Umwandlungseinheit ein permanenterregter Sychnchronmotor (PMSM) ist, der angeordnet und ausgebildet ist, eine Hydraulikpumpe des Aktuators anzutreiben, wobei die Hydraulikpumpe ausgebildet und angeordnet ist, einen Hydraulikzylinder des Aktuators anzutreiben bzw. mit hydraulischer Leistung zu versorgen.

Der Aktuator kann eine Elektromotorpumpe (EMP) sein, wobei die Umwandlungseinheit ein permanenterregter Sychnchronmotor (PMSM) ist, der angeordnet und ausgebildet ist, eine Hydraulikpumpe des Aktuators anzutreiben.

Der Aktuator kann ein servohydraulischer Aktuator mit einer "Remote Electronic Unit" (REU) sein.

Der Aktuator kann ein servohydraulischer Aktuator (SHA) sein, wobei die Umwandlungseinheit eine elektromagnetisch ansteuerbare Hydraulikverstärkereinheit, die ein Servoventil und einen Hydraulikzylinder aufweist, ist.

Vorzugsweise ist vorgesehen, dass das Aktuatorsystem mehrere der genannten Aktuatoren, Steuereinheiten und/oder Elektronikeinheiten aufweist, wobei diese jeweils in derselben Bauart oder in verschiedene Bauarten ausgeführt sein können.

In einer Ausführungsform des Aktuatorsystems kann die Steuereinheit mehrere Leistungssteller und mehrere Kommunikationsschnittstellen aufweisen, um mehrere Aktuatoren anzusteuern. Die Steuereinheit kann in einem "cabinet" integriert angeordnet sein.

Es ist auch denkbar, dass in einer Ausführungsform des Aktuatorsystems mehrere Elektronikeinheiten verschiedener Aktuatoren über einen Bus mit einer einzigen Steuereinheit kommunikativ verbunden sind. Anstelle mehrerer Kommunikationsschnittstellen können mehrere Elektronikeinheiten über von unterschiedlichen Aktuatoren parallel oder seriell an den Bus angeschlossen sein.

Alle Steuereinheiten und/oder Elektronikeinheiten des Aktuatorsystems können baugleich, also similar ausgeführt sein.

Insbesondere sofern in einer Ausführungsform des Aktuatorsystems mehrere Steuereinheiten und/oder mehrere Elektronikeinheiten vorhanden sind, können die Steuereinheiten und/oder Elektronikeinheiten dissimilar ausgeführt sein, vorzugsweise um die notwendige Sicherheit zu realisieren.

Vorzugsweise ist vorgesehen, dass die Steuereinheit eine Monitoreinheit und das Aktuatorsystem eine weitere Elektronikeinheit aufweist, die ausgebildet sind, um die Umwandlungseinheit zu überwachen.

Vorzugsweise ist vorgesehen, dass das Aktuatorsystem eine Backup-Steuereinheit und/oder eine weitere Elektronikeinheit aufweist, die ausgebildet sind, um dieselben Funktionen, wie die Steuereinheit und/oder mindestens eine der Elektronikeinheiten auszuführen und/oder wobei die Backup-Steuereinheit ausgebildet ist, um auszuwählen, ob ein erster Kanal oder ein zweiter Kanal die Kontrolle über den Aktuator erhält.

Die Erfindung betrifft auch ein Luftfahrzeug, insbesondere Flugzeug, mit einem erfindungsgemäßen Aktuatorsystem oder mehreren erfindungsgemäßen Aktuatorsystemen.

Die Erfindung betrifft auch ein Verfahren zum Betreiben eines erfindungsgemäßen Aktuatorsystems, wobei eine Integrität eines Signals eines Sensors, insbesondere eines Motorpositionssensors durch eine geberlose Regelung, eine Korrelation und/oder ein SIN² + COS²-Monitoring überprüft wird.

An die Steuereinheit können Steuerbefehle in Form von Kommunikationsinformationen des Luftfahrzeugs (A/C) übermittelt werden.

Vorzugsweise stellt oder regelt die Steuereinheit basierend auf Steuerbefehlen und den Informationen, die über die Elektronikeinheit bereitgestellt werden über die Steuerung über einen Leistungssteller die an den Aktuator bzw. die Umwandlungseinheit abgegebene elektrische Leistung.

Im Falle eins als EMA oder als EHA ausgebildeten Aktuators kann eine Positionsregelung, eine Drehzahlregelung und/oder eine Drehmomentregelung erfolgen.

Im Falle eins als EMP ausgebildeten Aktuators kann Druckregelung und/oder eine Flussregelung erfolgen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine schematische Darstellung einer Ausführungsform eines erfindungsgemäßen Aktuatorsystems.
- Fig. 2:: eine schematische Darstellung einer Ausführungsform eines erfindungsgemäßen Aktuatorsystems.
- Fig. 3:: eine schematische Darstellung einer Ausführungsform eines erfindungsgemäßen Aktuatorsystems.
- Fig. 4:: eine schematische Darstellung einer Ausführungsform eines erfindungsgemäßen Aktuatorsystems.
- Fig. 5:: eine schematische Darstellung einer Ausführungsform eines erfindungsgemäßen Aktuatorsystems.
- Fig. 6:: eine Ansicht einer Ausführungsform einer Elektronikeinheit eines erfindungsgemäßen Aktuatorsystems.

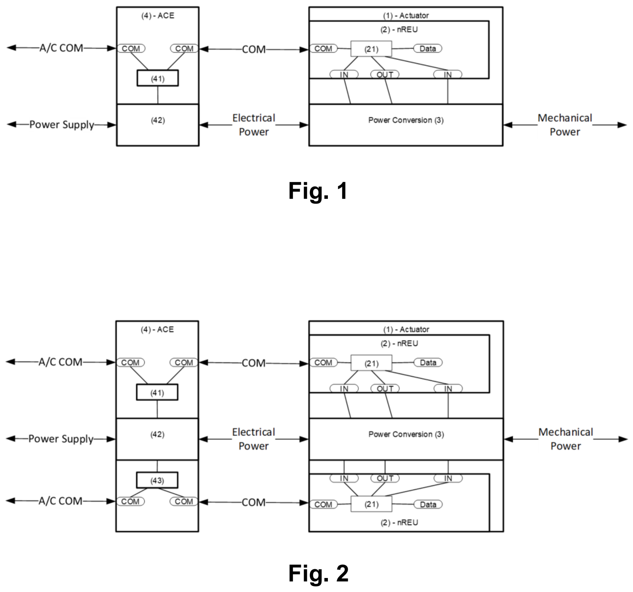

Die in Fig. 1 dargestellte Ausführungsform des Aktuatorsystems weist einen Aktuator 1 und eine Steuereinheit 4 auf.

Der Aktuator 1 weist eine Elektronikeinheit 2 und eine Umwandlungseinheit 3 auf.

Die Steuereinheit 4 weist zwei Kommunikationsschnittstellen COM auf, wobei die Steuereinheit 4 über eine der Kommunikationsschnittstellen COM mit einer zentralen Recheneinheit des Luftfahrzeugs, bspw. einem Flugsteuerungscomputer oder "Flight Control Computer" (FCC) des Luftfahrzeugs (A/C), verbunden und mit der anderen der Kommunikationsschnittstellen COM mit der Elektronikeinheit 2 verbunden ist.

Über die Kommunikationsschnittstelle COM, über die die Steuereinheit 4 mit der zentralen Recheneinheit verbunden ist, können Daten zwischen der Steuereinheit 4 und der zentralen Recheneinheit übermittelt werden. Bspw. können Steuerbefehle der zentralen Recheneinheit an die Steuereinheit 4 übermittelt werden oder es können Daten von der Steuereinheit 4 an die zentrale Recheneinheit übermittelt werden.

Über die Kommunikationsschnittstelle COM, über die die Steuereinheit 4 mit der Elektronikeinheit 2 verbunden ist, können Daten zwischen der zwischen der Steuereinheit 4 und der Elektronikeinheit 2 übermittelt werden. Bspw. können Daten von der Elektronikeinheit 2 an die Steuereinheit 4 und/oder von der Steuereinheit 4 an die Elektronikeinheit übermittelt werden.

Die Steuereinheit 4 weist eine Steuerung 41 und einen Leistungssteller 42 auf.

Der Leistungssteller 42 wird über eine Leistungsversorgung mit elektrischer Energie versorgt und ist mit der Umwandlungseinheit 3 verbunden, um die Umwandlungseinheit 3 mit elektrischer Energie zu versorgen.

Die Steuerung 41 ist ausgebildet, um den Leistungssteller 42 zu steuern, um die Umwandlungseinheit 3 mit der gewünschten elektrischen Energie zu versorgen.

Die Umwandlungseinheit 3 wandelt die elektrische Energie in mechanische Energie um.

Die Elektronikeinheit 2 weist eine Kommunikationsschnittstelle COM auf, mit der die Elektronikeinheit 2 mit der Steuereinheit 4 kommunikativ verbunden ist.

Die Steuerung 41 ist mit den zwei Kommunikationsschnittstellen COM verbunden.

Die Kommunikationsschnittstellen COM der Steuereinheit 4 und der Elektronikeinheit 2 sind digitale Schnittstellen.

Die Elektronikeinheit 2 weist ferner zwei Schnittstellen IN, mit denen die Elektronikeinheit mit der Umwandlungseinheit 3 verbunden ist, um Zustände der Umwandlungseinheit 3, bspw. mittels Sensoren, zu erfassen und eine Schnittstelle OUT, mit der die Elektronikeinheit 2 die Umwandlungseinheit 3 ansteuern kann. Bspw. kann über die Schnittstelle OUT eine Verriegelungseinheit der Umwandlungseinheit 3 angesteuert werden.

Die Elektronikeinheit 2 weist einen Speicher DATA aus. Bspw. sind in dem Speicher DATA eine Eigenschaft oder mehrere Eigenschaften des Aktuators und/oder der Umwandlungseinheit in Form von Daten gespeichert.

Die Elektronikeinheit 2 weist ferner eine Verarbeitungseinheit 21 auf, die mit der Kommunikationsschnittelle COM der Elektronikeinheit 2, mit den anderen Schnittstellen IN und OUT und dem Speicher DATA verbunden ist.

In Fig. 1 ist eine Ausführungsform, bei der ein einziger Kommunikationskanal zwischen der Steuereinheit 4 und dem Aktuator 1 in Form einer Verbindung über Kommunikationsschnittstellen COM zwischen der Elektronikeinheit 2 und der Steuereinheit 4 vorhanden ist, dargestellt.

Der Grundaufbau der in Fig. 2 dargestellten Ausführungsform ist derselbe, wie bei der in Fig. 1 dargestellten Ausführungsform, wobei zur Beschreibung dieses Grundaufbaus auf die Beschreibung zu Fig. 1 verwiesen werden kann.

In der in Fig. 2 dargestellten Ausführungsform sind jedoch zwei Kommunikationskanäle zwischen der Steuereinheit 4 und dem Aktuator 1 vorhanden.

Der Aktuator 1 weist hierzu eine zweite Elektronikeinheit 2 auf.

Die zweite Elektronikeinheit 2 weist dieselben Elemente, wie die erste Elektronikeinheit 2 der Ausführungsform aus Fig. 2 bzw. wie die einzige Elektronikeinheit 2 der Ausführungsform aus Fig. 1 auf und ist in derselben Weise mit der Umwandlungseinheit 3 verbunden. Die beiden Elektronikeinheiten 2 der Ausführungsform aus Fig. 2 können baugleich sein.

Die Steuereinheit 4 weist zwei weitere Kommunikationsschnittstellen COM, wobei die Steuereinheit 4 über eine der weiteren Kommunikationsschnittstellen COM mit der zentralen Recheneinheit des Luftfahrzeugs verbunden und mit der anderen der weiteren Kommunikationsschnittstellen COM mit der zweiten Elektronikeinheit 2 bzw. der Kommunikationsschnittstelle COM der zweiten Elektronikeinheit 2 verbunden ist.

Die Steuereinheit 4 weist ferner eine Monitoreinheit 43 auf, die mit den beiden weiteren Kommunikationsschnittstellen COM und mit dem Leistungssteller 42 verbunden ist.

Über die zweite Elektronikeinheit 2 im Aktuator 1 und die Monitoreinheit 43 in der Steuereinheit 4 können zu den über die Steuerung 41 bereitgestellten Informationen unabhängige Informationen über den Zustand oder die Zustände des Aktuators 1 an die zentrale Recheneinheit bereitgestellt werden.

Die Ausführungsform in Fig. 2 zeigt somit eine COM/MON-Architektur, wobei ein Command-Kanal und ein Monitor-Kanal zwischen der Steuereinheit 4 und dem Aktuator 1 vorhanden sind.

Die Architektur kann auch als CON/MON-Architektur bezeichnet werden, wobei der Command-Kanal als Control-Kanal bezeichnet wird.

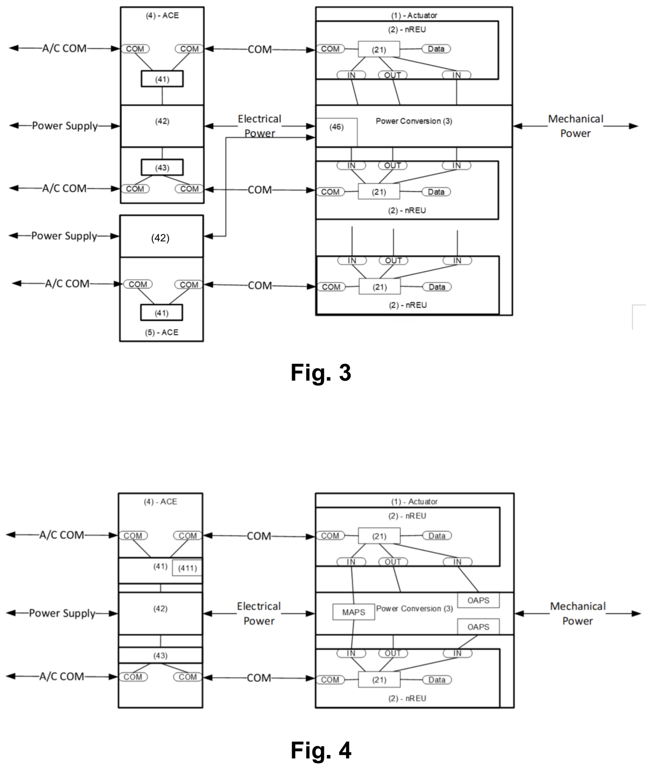

Der Grundaufbau der in Fig. 3 dargestellten Ausführungsform ist derselbe, wie bei der in Fig. 2 dargestellten Ausführungsform, wobei zur Beschreibung dieses Grundaufbaus auf die Beschreibung zu Fig. 2 verwiesen werden kann.

In der in Fig. 3 dargestellten Ausführungsform ist eine Backup-Steuereinheit 5 vorhanden, die denselben Aufbau, wie die Steuereinheit 4 aus Fig. 1 aufweist.

Der Leistungssteller 42 der Backup-Steuereinheit 5 ist, wie der Leistungssteller 42 der Steuereinheit 4 mit der Umwandlungseinheit 3 verbunden, um die Umwandlungseinheit 3 mit elektrischer Energie zu versorgen. Die Umwandlungseinheit 3 weist einen Umschalter 46 auf, um zwischen den beiden Energiequellen umzuschalten.

Der Aktuator 1 weist eine dritte Elektronikeinheit 2 auf, die dieselben Elemente, wie die Elektronikeinheit 2 der Ausführungsform aus Fig. 1 aufweist und in derselben Weise mit der Umwandlungseinheit 3 verbunden ist.

Die Steuereinheit 5 weist zwei Kommunikationsschnittstellen COM, wobei die Steuereinheit 5 über eine der Kommunikationsschnittstellen COM mit der zentralen Recheneinheit des Luftfahrzeugs verbunden und mit der anderen der Kommunikationsschnittstellen COM mit der dritten Elektronikeinheit 2 bzw. der Kommunikationsschnittstelle COM der dritten Elektronikeinheit 2 verbunden ist.

Über die dritte Elektronikeinheit 2 im Aktuator können sichere Informationen (Voting) bereitgestellt werden und/oder über die Backup-Steuereinheit 5 ein Notlauf realisiert werden.

Die Backup-Steuereinheit 5 weist dieselbe Architektur, wie die Steuereinheit 4 der Ausführungsform aus Fig. 1 auf.

Die Backup-Steuereinheit 5 kann Bestandteil der Steuereinheit 4 sein oder separat von der Steuereinheit 4 angeordnet sein.

Die Umschaltung 46 der Umwandlungseinheit 3 ist ausgebildet, um auf Backup-Steuereinheit 5 umzuschalten. Die Umschaltung kann auch in der Steuereinheit 4 realisiert sein.

Die Ausführungsform in Fig. 3 zeigt somit eine COM/MON/Backup-Architektur, wobei ein Command-Kanal und ein Monitor-Kanal zwischen der Steuereinheit 4 und dem Aktuator 1 und ein Backup-Kanal zwischen der Backup-Steuereinheit 5 und dem Aktuator 1 vorhanden sind.

Die Architektur kann auch als CON/MON/Backup-Architektur bezeichnet werden, wobei der Command-Kanal als Control-Kanal bezeichnet wird.

Die Ausführungsform aus Fig. 4 ist ähnlich zur Ausführungsform aus Fig. 2, wobei zur Beschreibung der Fig. 4 grundsätzlich auf die Beschreibung der Fig. 2 verwiesen wird.

In der Ausführungsform von Fig. 4 weist die Steuerung 41 zusätzlich eine Regeleinheit 411 zur geberlosen Regelung auf. Die Umwandlungseinheit 3 weist genau einen Umwandlungseinheitspositionssensor in Form eines Motorpositionssensors MAPS, um die Position der Umwandlungseinheit 3 in Form der Position eines Motors der Umwandlungseinheit 3 zu erfassen, auf. Ferner sind zwei Aktuatorausgangspositionssensoren OAPS vorhanden, um die Position des mechanischen Aktuatorsausgangs zu erfassen. Der Motorpositionssensor MAPS ist mit jeweils einer Schnittstelle IN der Elektronikeinheiten 2 verbunden. Jeweils ein Aktuatorausgangspositionssensoren OAPS ist mit einer Schnittstelle IN der Elektronikeinheiten 2 verbunden.

Jeder Aktuatorausgangspositionssensor OAPS kann auch als "Output Angular Position Sensor" bezeichnet werden. Jeder Aktuatorausgangspositionssensor ist vorzugsweise ein Drehsensor oder ein Drehzahlsensor.

Jeder Motorpositionsensor MAPS kann auch als "Motor Angular Position Sensor" bezeichnet werden. Jeder Motorpositionsensor ist vorzugsweise ein Drehsensor oder ein Drehzahlsensor.

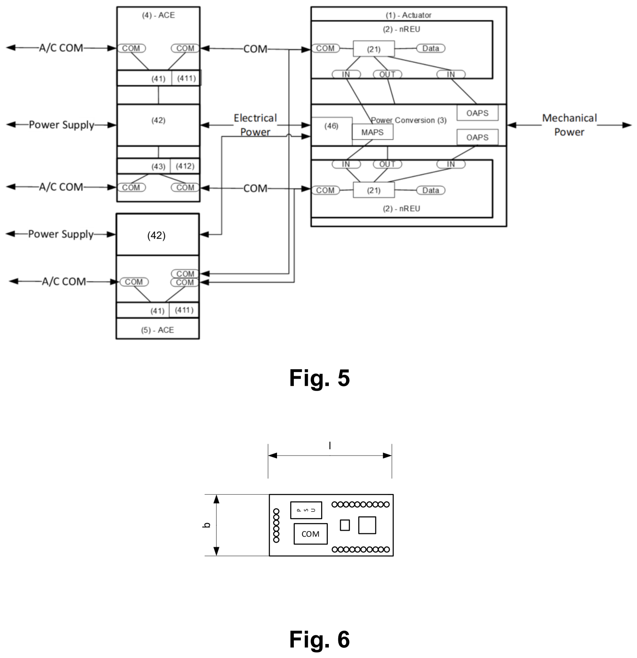

Die Ausführungsform aus Fig. 5 ist grundsätzlich eine Mischung der Ausführungsformen aus Fig. 3 und Fig. 4, wobei zur Beschreibung der Fig. 5 grundsätzlich auf die Beschreibung der Fig. 3 und der Fig. 4 verwiesen wird.

Die Steuerung 41 der Steuereinheit 4 weist gegenüber der Steuerung 41 aus Fig. 3 eine Regeleinheit 411 zur geberlosen Regelung auf.

Die Monitoreinheit 43 der Steuereinheit 4 weist gegenüber der Monitoreinheit 43 aus Fig. 3 eine Erfassungseinheit 412 zur geberlosen Erfassung auf.

Die Backup-Steuereinheit 5 weist gegenüber der Backup-Steuereinheit 5 aus Fig. 3 eine zusätzliche Kommunikationsschnittstelle COM auf, wobei die Backup-Steuereinheit 5 über die zusätzliche Kommunikationsschnittstellen COM mit beiden Kommunikationsschnittstellen COM der beiden Elektronikeinheiten 2 verbunden ist.

Der Aktuator 1 ist wie in Fig. 4 ausgeführt.

Vorzugsweise ist pro Aktuator nur genau ein Motorpositionssensors MAPS oder nur genau ein Aktuatorausgangspositionssensor OAPS vorhanden.

Das Aktuatorsystem gemäß den Figuren 4 und 5 weist zwei redundante Kanäle, die in den Figuren 4 und 5 mit den Doppelpfeilen, die mit COM bezeichnet sind, dargestellt sind, auf.

Gemäß Fig. 5 kann eine Auswahleinheit in Form der Backup-Steuereinheit 5, zum Auswählen, ob der erste Kanal oder der zweite Kanal die Kontrolle über den Aktuator erhält, vorhanden sein.

Die Backup-Steuereinheit 5 kann von beiden Elektronikeinheiten 2 Informationen über den mittels des genau einen Motorpositionssensors MAPS erfassten Zustands, bspw. in Form jeweils eines von jeder Elektronikeinheit 2 bereitgestellten Drehzahlinformationswerts erhalten. Die Backup-Steuereinheit 5 ist dazu ausgelegt ist, auf Grundlage der Drehzahlinformationswerte eine Entscheidung zu treffen, ob der erste Kanal oder der zweite Kanal die Kontrolle über den Aktuator 1 erhält.

Es kann auch ein Korrelationsprinzip angewendet und/oder die Sensoren MAPS und/oder OAPS stellen Integritätsinformation zur Verfügung, z.B. SIN und COS, womit ein SIN² + COS²-Monitoring erfolgen kann.

Da die Positionsauswertung nun elektronische Bauteile, wie Mikrocontroller oder FPGA aufweist, ist mit einer fehlerhaften, aber validen Position zu rechnen.

In den Ausführungsformen COM/MON und COM/MON/Backup wird vorzugsweise nur ein Motorpositionssensor verwendet, der aber falls notwendig von allen Elektronikeinheiten ausgewertet werden kann.

Es ist möglich die Integrität, insbesondere des Signals des Motorpositionssensors, wie folgt geberlos zu überprüfen:
- Vorzugsweise werden die Command- bzw. Control-Kanäle mit einer geberlosen Regelung ausgestattet, die es erlaubt die Motorposition zu bestimmen. Vorzugsweise weist die Steuerung hierzu eine Regeleinheit zur geberlosen Regelung auf.
- Vorzugsweise ist, insbesondere mittels der COM/MON-Architektur eine sichere Fehlererkennung möglich.
- Auch kann der Monitor-Kanal aus den Informationen Ausgangspannung und Ausgangstrom die Motorposition bestimmen und über eine geberlose Erfassung die Motorposition erfassen.
- Hierdurch lässt ich ein möglicher Fehler isolieren und ein weiterer Betrieb ist möglich.

Es ist möglich die Integrität, insbesondere des Signals des Motorpositionssensors, wie folgt durch Korrelation zu überprüfen:
- Vorzugsweise wird die kumulierte Position des Motors, die durch den Motorpositionssensor erfasst wurde mit den Positionen, die durch den ersten Aktuatorausgangspositionssensor und den zweiten Aktuatorausgangspositionssensor erfasst wurden, vergleichen und eine Fehlererkennung ist u.U. möglich. Es können nicht alle Fehler des Motorpositionssensors isoliert werden. Z.B. ein Offset lässt sich nicht zuordnen.
- Ein Backupbetrieb lässt ich nicht realisieren.
- Die Korrelation kann auch über einen Aktuatorausgangspositionssensor und zwei Motorpositionssensoren gelöst werden, allerdings verschiebt sich dabei das Offset-Problem auf den Ausgang.

Es ist möglich die Integrität, insbesondere des Signals des Motorpositionssensors, wie folgt durch ein SIN² + COS²-Monitoring zu überprüfen:
- Hierzu stellt der Motorpositionssensor SIN- und COS-Signale beiden Elektronikeinheiten zur Verfügung und jede Elektronikeinheit ist in der Lage die Integrität unabhängig festzustellen.
- Gleiches ist möglich auch für den Aktuatorausgangspositionssensor.

Vorzugsweise kann die Kommunikation auf mehrere Kanäle verteilt werden. Z.B. empfängt der Backup-Kanal Informationen von allen Elektronikeinheiten und kann mittels der ebenfalls vorhandenen geberlosen Regelung einen weiteren Betrieb sicherstellen.

Die Steuereinheit weist vorzugsweise Isolationsfunktionen auf, um im Fehlerfall die Kommunikation von dem gestörten Teilnehmer zu trennen. Z.B. bei einem Fehler des Command-Kanals trennt sich dieser vom Bus und der Backup-Kanal kann die Steuerung übernehmen. Die Entscheidung kann über ein Voting Command-Kanal vs. Backup-Kanal vs. Monitor-Kanal erfolgen.

Über zwei Informationswerte ergibt sich eine eindeutige Fehleridentifikation mittels Korrelation der Aktuatorausgangspositionssensoren, wobei der ein Wert des ersten Aktuatorausgangspositionssensors mit einem Wert des zweiten Aktuatorausgangspositionssensors verglichen wird und/oder mittels des Motorpositionssensors, wobei ein Wert des Motorpositionssensors mit einem Wert des ersten Aktuatorausgangspositionssensors und mit einem Wert des zweiten Aktuatorausgangspositionssensors verglichen wird.

Über drei Informationswerte ergibt sich eine eindeutige Fehlerisolation durch ein geberloses Verfahren mittels der Aktuatorausgangspositionssensoren, wobei der ein Wert des ersten Aktuatorausgangspositionssensors mit einem Wert des zweiten Aktuatorausgangspositionssensors verglichen wird und ein Wert des zweiten Aktuatorausgangspositionssensors mit einem Wert einer bestätigten Motorposition verglichen wird und/oder wobei ein mittels der Steuereinheit geberlos ermittelter Wert der Motorposition mit einem mittels der Backup-Steuereinheit geberlos ermittelter Wert der Motorposition verglichen wird.

Die in Fig. 6 gezeigte Elektronikeinheit weist eine Platine auf, auf der die Bauelemente der Elektronikeinheit angeordnet sind.

Die Elektronikeinheit kann gut in den Aktuator, insbesondere auf Grund des geringen Bauraums integriert werden.

Vorzugsweise können mittels der Elektronikeinheit oder des Konzepts einfach neue Sensoren in den Aktuator integriert werden.

## Patentansprüche

1. Aktuatorsystem, insbesondere für ein Luftfahrzeug, mit einem Aktuator, der eine Umwandlungseinheit zur Umwandlung von elektrischer und/oder hydraulischer Leistung in mechanische Leistung aufweist, und einer Steuereinheit zur Versorgung der Umwandlungseinheit mit elektrischer Leistung und/oder zur Ansteuerung der Umwandlungseinheit, **dadurch gekennzeichnet, dass** das Aktuatorsystem eine von der Leistungseinheit separat angeordnete Elektronikeinheit aufweist, die ausgebildet ist, um einen Zustand oder mehrere Zustände des Aktuators und/oder der Umwandlungseinheit zu erfassen, den erfassten Zustand oder die erfassten Zustände in Daten umzuwandeln und die Daten digital an die Steuereinheit zu übermitteln, wobei die Elektronikeinheit einen Speicher aufweist, wobei in dem Speicher eine Eigenschaft oder mehrere Eigenschaften des Aktuators und/oder der Umwandlungseinheit in Form von Daten gespeichert sind und die Elektronikeinheit ausgebildet ist, um, insbesondere auf Anforderung der Steuereinheit, eine, mehrere oder alle der gespeicherten Daten an die Steuereinheit zu übermitteln, wobei die Steuereinheit, insbesondere basierend auf von dem Aktuator und/oder der Elektronikeinheit übermittelten Daten und/oder basierend auf an die Steuereinheit übermittelten Steuerbefehlen, ausgebildet ist, um den Aktuator und/oder die Umwandlungseinheit zu regeln und/oder zu steuern.

2. Aktuatorsystem nach Anspruch 1, **dadurch gekennzeichnet, dass** die Steuereinheit und die Elektronikeinheit jeweils eine digitale Kommunikationsschnittstelle aufweisen und über diese Kommunikationsschnittstellen verbunden sind, um Daten von der Elektronikeinheit an die Steuereinheit und/oder um Daten von der Steuereinheit an die Elektronikeinheit zu übermitteln.

3. Aktuatorsystem nach Anspruch 1 oder 2, **dadurch gekennzeichnet, dass** die Elektronikeinheit ausgebildet ist, um einfache Ansteuerungen in Form einer digitalen Ein-Aus-Ansteuerung, insbesondere ein Auftrennen eines Leistungspfads und/oder ein Schalten einer Verriegelungseinheit, insbesondere einer Bremse, ausführen zu können.

4. Aktuatorsystem nach einem der vorhergehenden Ansprüche, **dadurch gekennzeichnet, dass** der Zustand oder die Zustände eine Position der Umwandlungseinheit, eine Position des Aktuators, insbesondere eines mechanischen Aktuatorausgangs, eine Temperatur des Aktuators, eine auf den Aktuator wirkende Kraft, ein auf den Aktuator wirkendes Moment, eine an dem Aktuator anliegende elektrische Spannung, ein durch den Aktuator fließenden elektrischen Strom und/oder eine oder mehrere sonstige Größen, insbesondere eine Beschleunigung und/oder eine Feuchtigkeit, ist oder sind.

5. Aktuatorsystem nach einem der vorhergehenden Ansprüche, **dadurch gekennzeichnet, dass** der Aktuator eine oder mehrere zusätzliche mechanische und/oder hydraulische Umwandlungseinheiten aufweist.

6. Aktuatorsystem nach einem der vorhergehenden Ansprüche, **dadurch gekennzeichnet, dass** die Steuereinheit einen Leistungssteller aufweist, der ausgebildet ist, um die Umwandlungseinheit mit elektrischer Energie zu versorgen.

7. Aktuatorsystem nach einem der vorhergehenden Ansprüche, **dadurch gekennzeichnet, dass** das Aktuatorsystem einen oder mehrere Sensoren aufweist, die derart mit der Elektronikeinheit verbunden und angeordnet sind, dass die Elektronikeinheit den Zustand oder die Zustände des Aktuators und/oder der Umwandlungseinheit mittels des Sensors oder mittels der Sensoren erfassen kann, wobei der Sensor ausgebildet und angeordnet ist, um den Zustand oder mehrere Zustände erfassen zu können oder wobei jeder der Sensoren ausgebildet und angeordnet ist, um jeweils einen oder mehrere der Zustände erfassen zu können.

8. Aktuatorsystem nach dem vorhergehenden Anspruch 7, **dadurch gekennzeichnet, dass** für die Erfassung mindestens eines Zustands des Aktuators, insbesondere für die Erfassung der Position der Umwandlungseinheit und/oder der Position des Aktuators, insbesondere des mechanischen Aktuatorausgangs, insbesondere jeweils, nur genau ein Sensor vorgesehen ist.

9. Aktuatorsystem nach einem der vorhergehenden Ansprüche, **dadurch gekennzeichnet, dass** die Elektronikeinheit Bestandteil des Aktuators ist und/oder in einer baulichen Einheit mit dem Aktuator und/oder der Umwandlungseinheit angeordnet ist.

10. Aktuatorsystem nach einem der vorhergehenden Ansprüche, **dadurch gekennzeichnet, dass** alle Bestandteile des Aktuatorsystems in einer baulichen Einheit angeordnet sind oder mindestens ein Bestandteil des Aktuatorsystems, insbesondere die Steuereinheit, separat von den anderen Bestandteilen des Aktuatorsystems angeordnet ist.

11. Aktuatorsystem nach einem der vorhergehenden Ansprüche, **dadurch gekennzeichnet, dass** die Umwandlungseinheit ein Elektromotor, insbesondere ein permanenterregter Sychnchronmotor, oder eine Hydraulikeinheit mit einem Hydraulikventil, insbesondere ein Servoventil, und einem Hydraulikzylinder ist.

12. Aktuatorsystem nach einem der vorhergehenden Ansprüche, **dadurch gekennzeichnet, dass** der Aktuator ein Getriebe und/oder eine Spindel aufweist, wobei die Umwandlungseinheit ausgebildet und angeordnet ist, um das Getriebe anzutreiben und/oder das Getriebe ausgebildet und angeordnet ist, um die Spindel anzutreiben oder dass der Aktuator eine Hydraulikpumpe und/oder einen Hydraulikzylinder aufweist, wobei die Umwandlungseinheit ausgebildet und angeordnet ist, um die Hydraulikpumpe anzutreiben und/oder die Hydraulikpumpe ausgebildet und angeordnet ist, um den Hydraulikzylinder anzutreiben und/oder mit hydraulischer Leistung zu versorgen.

13. Aktuatorsystem nach einem der vorhergehenden Ansprüche, **dadurch gekennzeichnet, dass** das Aktuatorsystem mehrere der genannten Aktuatoren, Steuereinheiten und/oder Elektronikeinheiten aufweist, wobei diese jeweils in derselben Bauart oder in verschiedene Bauarten ausgeführt sein können.

14. Aktuatorsystem nach einem der vorhergehenden Ansprüche, **dadurch gekennzeichnet, dass** die Steuereinheit eine Monitoreinheit und das Aktuatorsystem eine weitere Elektronikeinheit aufweist, die ausgebildet sind, um die Umwandlungseinheit zu überwachen.

15. Aktuatorsystem nach einem der vorhergehenden Ansprüche, **dadurch gekennzeichnet, dass** das Aktuatorsystem eine Backup-Steuereinheit und/oder eine weitere Elektronikeinheit aufweist, die ausgebildet sind, um dieselben Funktionen, wie die Steuereinheit und/oder mindestens eine der Elektronikeinheiten auszuführen und/oder wobei die Backup-Steuereinheit ausgebildet ist, um auszuwählen, ob ein erster Kanal oder ein zweiter Kanal die Kontrolle über den Aktuator erhält.

16. Luftfahrzeug, insbesondere Flugzeug, mit einem Aktuatorsystem oder mehreren Aktuatorsystemen nach einem der vorhergehenden Ansprüche.

17. Verfahren zum Betreiben eines Aktuatorsystems nach einem der Ansprüche 1 bis 15, wobei eine Integrität eines Signals eines Sensors, insbesondere eines Motorpositionssensors durch eine geberlose Regelung, eine Korrelation und/oder ein SIN² + COS²-Monitoring überprüft wird.
